# FASCICULE DE BREVET EUROPEEN

(11) **EP 3 771 799 B1**
(45) Date de publication et mention de la délivrance du brevet: **18.03.2026**
(21) Numéro de dépôt: 20188742.9
(22) Date de dépôt: 30.07.2020
(51) Int. Cl.: E06B 3/70, E06B 3/964, E06B 11/02, F16B 7/04, E06B 3/72, E06B 3/96

(54) **OSSATURE EN KIT ECONOMIQUE POUR VANTAIL FIXE, PIVOTANT OU COULISSANT POUR PORTAIL**
RAHMEN IM KOSTENGÜNSTIGEN SET FÜR FESTEN, DREHBAREN ODER SCHIEBE-ÖFFNUNGSFLÜGEL EINES TORS
FRAME IN ECONOMICAL KIT FORM FOR A FIXED, HINGED OR SLIDING LEAF FOR A GATE

(30) Priorité: 01.08.2019 FR 1908854
(43) Date de publication de la demande: 03.02.2021
(73) Titulaire: GP Portail, 89140 Pont sur Yonne (FR)
(72) Inventeur: PIOU, Guillaume, 89190 Chigy (FR); GARNERONE, Nicolas, 89140 Pont sur Yonne (FR)
(74) Mandataire: Oudin, Stéphane

(56) Documents cités:
- CA-A1- 2 320 656
- FR-A1- 2 866 671
- IT-A1- CO20 110 059
- US-A- 4 188 019
- US-A1- 2016 097 216

## Description

### Domaine technique de l'invention

La présente invention concerne une ossature en kit facile et rapide à mettre en œuvre, ne nécessitant pas d'outillage particulier ni de formation préalable et destinée à réaliser un vantail fixe, pivotant ou coulissant pour un portail ou analogue. La présente invention concerne également le procédé d'assemblage de ladite ossature.

### Etat de la technique

On sait que, pour fabriquer notamment un vantail de portail par exemple en alliage d'aluminium, on utilise classiquement une ossature comprenant au moins deux montants, une traverse inférieure, une traverse supérieure, le cas échéant, une traverse intermédiaire et des lames de remplissage jointives ou espacées. Pour réaliser ledit vantail, les différents éléments sont assemblés soit par soudage soit par vissage-boulonnage.

Dans le premier cas, il est nécessaire de faire des soudures fermées au droit de chaque assemblage de deux éléments afin d'éviter des problèmes de corrosion et notamment de traces blanches dues principalement à l'oxydation de l'aluminium, lesdites soudures fermées sont couteuses et doivent être réalisées par du personnel qualifié. En outre, l'opération de laquage doit être effectuée après l'assemblage desdits éléments entre eux rendant ladite opération de laquage plus délicate à réaliser compte tenu de l'encombrement du vantail et des difficultés d'accès à certaines zones.

Dans le deuxième cas, un élément sur deux comporte, sur une de ses faces, une ouverture usinée apte à permettre l'insertion partielle d'un élément adjacent dans ledit élément et sur la face opposée un logement muni d'au moins un orifice apte à coopérer avec un organe de fixation, de type vis par exemple, pour solidariser les deux éléments adjacents entre eux. Ce type d'assemblage nécessite, d'une part, des opérations d'usinage coûteuses sur deux faces opposées de certains éléments et, d'autre part, de réaliser l'opération de laquage après l'assemblage afin de ne pas détériorer ledit laquage lors notamment de l'insertion des éléments dans l'ouverture des éléments adjacents. Pour les mêmes raisons que précédemment, le laquage est donc délicat et le problème des traces blanches reste entier, comme il sera dit plus loin. En effet, de manière classique, il n'y a pas d'étanchéité autour des ouvertures et évidemment pas de laque sur les extrémités des éléments insérées dans lesdites ouvertures, lesdites extrémités peuvent donc s'oxyder et des traces blanches peuvent donc apparaître. De plus, les usinages nécessitent des outillages de précision particuliers et du personnel préalablement formé.

Enfin, ces deux types d'assemblages connus nécessitent un montage en usine et un emballage pour le transport plus volumineux renchérissant le prix de revient du vantail.

Le document CA 2 320 656 A1 décrit une ossature en kit selon le préambule de la revendication 1, respectivement la revendication 2, annexées.

### Résumé de l'invention

Le but de la présente invention est donc de pallier les inconvénients précédemment cités et de proposer une ossature en kit économique, facile et rapide à mettre en œuvre, ne nécessitant pas d'outillage particulier ni de formation préalable et destinée notamment à réaliser un vantail fixe, pivotant ou coulissant pour un portail ou analogue. En outre, cette ossature est particulièrement solide et supprime l'apparition de traces blanches.

Conformément à l'invention, il est donc proposé une ossature en kit destinée notamment à réaliser un vantail fixe ou pivotant ou coulissant pour un portail ou analogue, ladite ossature en kit comprenant au moins un montant et une traverse reliés entre eux, chaque montant étant un tube creux muni d'au moins :
- une enveloppe externe,
- un premier raidisseur plan s'étendant longitudinalement à l'intérieur de ladite enveloppe,
- une première ouverture aménagée sur l'enveloppe et traversant au moins l'épaisseur de cette dernière, et
- une deuxième ouverture aménagée dans le premier raidisseur et disposée dans le prolongement de la première ouverture et ayant une forme semblable à celle de ladite première ouverture, ladite ossature en kit étant remarquable en ce que chaque traverse comporte au moins une extrémité longitudinale conformée pour être insérée de façon ajustée dans les première et deuxième ouvertures associées et encliquetées par rapport audit montant.

Selon un premier mode de réalisation, ladite extrémité de chaque traverse est élastiquement déformable pour être encliquetée par rapport audit premier raidisseur des montants.

Selon un deuxième mode de réalisation, chaque montant comporte au moins une languette interne élastiquement déformable s'étendant longitudinalement à l'intérieur desdits montants et étant solidaire de l'enveloppe, et ladite extrémité de chaque traverse est encliquetée par rapport à l'extrémité libre de ladite languette interne.

Chaque traverse est un tube creux muni d'au moins
- une enveloppe externe, et
- une entaille aménagée transversalement sur l'enveloppe apte à coopérer soit avec le premier raidisseur des montants, soit avec l'extrémité libre de la languette interne, lorsque l'extrémité de la traverse est insérée dans les première et deuxième ouvertures dudit montant.

L'extrémité longitudinale de chaque traverse comporte une première ouverture et une deuxième ouverture aménagées longitudinalement en vis-à-vis depuis chacune des extrémités longitudinales de l'enveloppe et traversant au moins l'épaisseur de cette dernière.

Le premier raidisseur comprend de préférence au moins un rebord s'étendant vers l'intérieur de chaque deuxième ouverture et étant apte à coopérer avec l'entaille des traverses.

L'ossature en kit comporte avantageusement un organe de blocage pour garantir le maintien en position d'une traverse encliquetée dans un montant.

L'organe de blocage est apte à être inséré simultanément dans au moins l'une des première et deuxième ouvertures de ladite traverse pour interdire, une fois l'encliquetage de ladite traverse, tout rapprochement des parties de l'enveloppe de cette dernière situées de part et d'autre des première et deuxième ouvertures.

De manière avantageuse, l'organe de blocage est un coussinet cylindrique apte à recevoir un axe de pivotement solidaire d'un support agencé pour être fixé sur un poteau ou mur.

### Brève description des figures

D'autres avantages et caractéristiques ressortiront mieux de la description qui va suivre d'un mode d'exécution d'un vantail selon l'invention, en référence aux figures annexées sur lesquelles :
[Fig 1] est une vue en perspective d'un vantail formé par une ossature en kit conforme à l'invention,
[Fig 2] est une vue en coupe verticale partielle du vantail selon l'axe II-II' de la figure 1,
[Fig 3] est une vue en coupe horizontale partielle du vantail selon l'axe III-III' de la figure 1,
[Fig 4] est une vue en coupe horizontale partielle du vantail selon l'axe IV-IV' de la figure 1,
[Fig 5] est une vue en perspective de l'extrémité d'un montant du vantail de la figure 4,
[Fig 6] est une vue en perspective de l'extrémité d'une traverse du vantail de la figure 4,
[Fig 7] est une vue de face d'un coin supérieur de vantail de la figure 1,
[Fig 8] est une vue en coupe verticale partielle du vantail selon l'axe VIII-VIII' de la figure 7,
[Fig 9] est une vue en perspective du vantail de la figure 7 sans le capuchon de protection.
[Fig 10] est une vue en perspective de l'extrémité d'une traverse d'un vantail formé par une autre variante de réalisation d'une ossature en kit conforme à l'invention,
[Fig 11] est une vue en perspective de l'extrémité d'un montant du vantail formé par l'autre variante de réalisation d'une ossature en kit,
[Fig 12] est une vue en perspective d'un coin supérieur du vantail formé par l'autre variante de réalisation d'une ossature en kit.

### Description des modes de réalisation

Dans la description ci-après, on décrit une ossature en kit selon l'invention pour réaliser un vantail pivotant de portail de forme globalement rectangulaire et comportant au moins quatre éléments, à savoir deux montants et deux traverses. L'ossature en kit peut également comporter une traverse intermédiaire et des lames de remplissage jointives ou espacées disposées verticalement, par exemple, de part et d'autre de ladite traverse intermédiaire. Il va de soi que cette ossature en kit pourra avoir une toute autre forme telle que carrée ou trapézoïdale sans sortir du cadre de la présente invention. De même ladite ossature en kit pourra ne comporter que des lames de remplissage jointives ou que des lames de remplissage espacées, ou encore aucune lame de remplissage sans sortir du cadre de la présente invention, qui est définie par les revendications annexées. Enfin ladite ossature en kit pourra être utilisée pour réaliser un vantail pour portillon ou portail coulissant ou pour réaliser une barrière sans sortir du cadre de la présente invention, qui est définie par les revendications annexées.

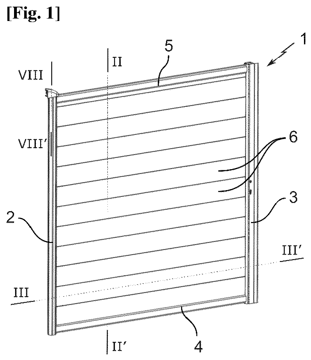

Ainsi, en référence à la figure 1, l'ossature en kit 1 selon l'invention comporte au moins deux montants 2,3 sensiblement verticaux et deux traverses 4,5, ces dernières étant de préférence horizontales et reliant les deux montants 2,3 respectivement au voisinage de leurs extrémités inférieures et supérieures. Sur la figure 1, on a représenté une ossature en kit 1 comportant avantageusement des lames de remplissage 6, jointives et disposées horizontalement entre les traverses 4,5 et joignant les deux montants 2,3. Comme rappelé ci-dessus, cette configuration n'est en rien limitative.

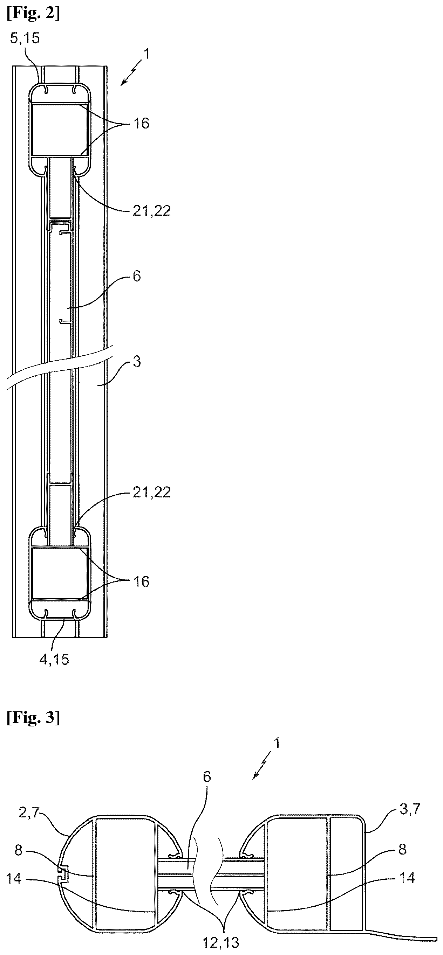

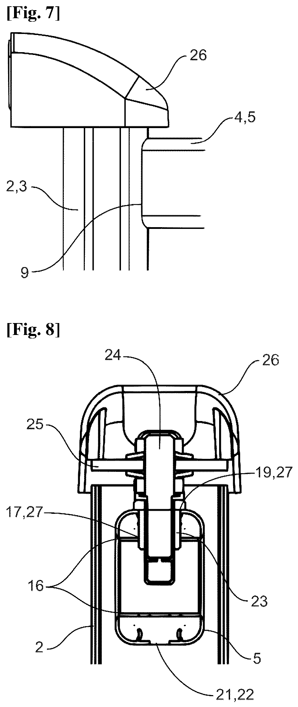

Les deux montants 2,3, les deux traverses 4,5 et les lames de remplissage 6 sont de préférence réalisés au moins en partie à partir de profilés extrudés en alliage léger de type aluminium, par exemple. Pour des raisons évidentes de résistance mécanique, lesdits profilés extrudés sont avantageusement cloisonnés et comportent un certain nombre de nervures, renforts et autres raidisseurs pour garantir la bonne tenue mécanique desdits profilés (Cf. figure 3 ou 8). De même, pour des raisons évidentes de réduction du coût de fabrication, les deux traverses 4,5 sont avantageusement identiques.

Toutefois, on comprend bien que les différents éléments constituant l'ossature en kit 1 selon l'invention pourront être réalisés dans d'autres matériaux tels que de l'acier inoxydable ou des matières plastiques sans sortir du cadre de la présente invention, qui est définie par les revendications annexées.

Les différents éléments constitutifs de l'ossature en kit 1 rappelés ci-dessus sont représentés de façon plus détaillée sur les figures 2 à 9.

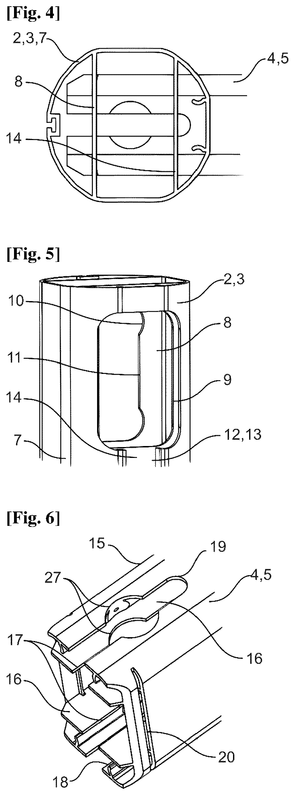

Ainsi, les deux montants 2,3 sont des tubes creux munis chacun d'au moins :
- une enveloppe 7 externe,
- un premier raidisseur 8 plan s'étendant longitudinalement à l'intérieur de ladite enveloppe 7, et
- une première ouverture 9 (Cf. figure 5) aménagée à chacune des extrémités longitudinales de l'enveloppe 7, traversant au moins l'épaisseur de cette dernière et étant conformée pour permettre l'insertion, dans l'enveloppe 7, de l'une des extrémités de l'une des traverses 4,5 de l'ossature en kit 1 de sorte que l'axe longitudinal de ladite traverse 4,5 soit sécant, avantageusement perpendiculaire, au premier raidisseur 8.

Pour cela, la première ouverture 9 de l'enveloppe 7 a une forme correspondant à la section transversale de la traverse 4,5 associée, mais de dimensions très légèrement supérieures pour permettre l'insertion de façon ajustée de cette dernière.

On désigne ici par "de façon ajustée" le fait que les dimensions de la première ouverture 9 sont telles qu'elles ne permettent un déplacement relatif de la traverse 4,5 par rapport au montant 2,3 que selon la direction d'insertion de la traverse 4,5.

Les montants 2,3 comprennent en outre au moins deux deuxièmes ouvertures 10 aménagées dans le premier raidisseur 8 et disposées chacune dans le prolongement de l'une des premières ouvertures 9 pour permettre l'insertion, dans l'enveloppe 7 puis dans le premier raidisseur 8, d'une extrémité de l'une des traverse 4,5 de l'ossature en kit 1. Pour ce faire, la forme des deuxième ouvertures 10 est semblable à celle des premières ouvertures 9. Toutefois, la forme des deuxièmes ouvertures 10 diffère en ce que le premier raidisseur 8 comprend au moins un rebord 11 s'étendant vers l'intérieur de chacune des deuxième ouvertures 10 (Cf. figure 5).

Selon un mode de réalisation avantageux, le premier raidisseur 8 comprend deux rebords 11 disposés en vis-à-vis et s'étendant vers l'intérieur de chacune des deuxièmes ouvertures 10.

Les montants 2,3 comportent avantageusement au moins une rainure 12 formée par au moins une fente 13 longitudinale rejoignant les premières ouvertures 9 aménagées aux extrémités longitudinales de l'enveloppe 7, ladite rainure 12 étant apte à recevoir au moins une partie des lames de remplissage 6, avantageusement leurs extrémités longitudinales.

Par ailleurs, de manière avantageuse, les montants 2,3 comportent également respectivement un deuxième raidisseur 14 plan s'étendant longitudinalement à l'intérieur de ladite enveloppe 7 entre la première ouverture 9 et le premier raidisseur 8 et parallèlement à ce dernier. Dans cette configuration, la première ouverture 9 aménagée à chacune des extrémités longitudinales de l'enveloppe 7 traverse non seulement l'épaisseur de cette dernière, mais également l'épaisseur dudit deuxième raidisseur 14. De même, avec ce deuxième raidisseur 14, la rainure 12 est alors formée par ladite fente 13 longitudinale et par au moins une partie dudit deuxième raidisseur 14 (Cf. figure 3).

Les traverses 4,5 sont des tubes creux munis chacune avantageusement d'au moins :
- une enveloppe 15 externe,
- un raidisseur 16 plan s'étendant longitudinalement à l'intérieur de ladite enveloppe 15 et comportant une fente 17 s'étendant longitudinalement depuis chacune de ses extrémités,
- une première ouverture 18 et une deuxième ouverture 19 aménagées longitudinalement en vis-à-vis depuis chacune des extrémités longitudinales de l'enveloppe 15 et traversant au moins l'épaisseur de cette dernière, la fente 17 et les première et deuxième ouvertures 18,19 étant conformées pour que leurs axes longitudinaux soient coplanaires, et
- une entaille 20 (Cf. figure 6) aménagée transversalement à chacune des extrémités longitudinales de l'enveloppe 15 apte à coopérer avec le rebord 11 du premier raidisseur 8 des montants 2,3 lorsque les extrémités des traverses 4,5 sont insérées dans la première ouverture 9 desdits montants 2,3.

On comprend bien que les traverses 4,5 de petites dimensions pourront ne pas comporter de raidisseur 16 plan sans sortir du cadre de la présente invention.

Selon un mode de réalisation avantageux, les traverses 4,5 comprennent deux entailles 20 aménagées transversalement en vis-à-vis de sorte que le plan contenant leurs axes longitudinaux soit sécant, de préférence perpendiculaire, au plan contenant les axes longitudinaux desdites fentes 17 et les première et deuxième ouvertures 18,19 des montants 2,3.

Par ailleurs, les traverses 4,5 comprennent avantageusement deux raidisseurs 16 plans parallèles entre eux.

De plus, les traverses 4,5 comportent avantageusement une rainure 21 formée par au moins une fente 22 longitudinale rejoignant leurs deux premières ouvertures 18 et/ou leurs deux deuxièmes ouvertures 19, ladite rainure 21 étant apte à recevoir au moins une partie des lames de remplissage 6, avantageusement leurs extrémités longitudinales.

On comprend bien que les fentes 17 et les première et deuxième ouvertures 18,19 confèrent à chaque extrémité longitudinale des traverses 4,5 une élasticité permettant aux parties de l'enveloppe 15 situées de part et d'autre desdites fentes 17 et les première et deuxième ouvertures 18,19 de se rapprocher l'une de l'autre, puis de reprendre leur place initiale. Ainsi, avec cette configuration, chaque extrémité de l'une des traverses 4,5 est insérée dans la première ouverture 9 de l'enveloppe 7 d'un des montants 2,3, puis encliquetée par rapport au premier raidisseur 8 de ce dernier. Pour l'encliquetage, chaque extrémité de l'une des traverses 4,5 est insérée dans la deuxième ouverture 10 associée aménagée dans ledit premier raidisseur 8, les parties de l'enveloppe 15 de ladite traverse 4,5 situées de part et d'autre des fentes 17 et des première et deuxième ouvertures 18,19 vont alors se rapprocher l'une de l'autre, jusqu'à ce que chaque rebord 11 de ladite deuxième ouverture 10 du premier raidisseur 8 vienne s'engager dans l'entaille 20 associée de l'enveloppe 15 de la traverse 4,5, les dites parties de l'enveloppe 15 de cette dernière reprenant alors leur position initiale.

On comprend bien que l'assemblage par encliquetage de chaque traverse 4,5 sur le montant 2,3 désigne ici le fait qu'une fois son extrémité longitudinale insérée dans les première et deuxième ouvertures 9,10 puis encliquetée, la traverse 4,5 est bloquée en position par rapport audit montant 2,3 sans avoir recours à aucun autre élément. Par ailleurs, l'assemblage par encliquetage de chaque traverse sur le montant désigne ici le fait qu'une partie de la traverse 4,5 et/ou du montant 2,3 va se déformer ou déplacer élastiquement au moment de l'insertion de ladite traverse 2,3 dans les première et deuxième ouvertures 9,10 du montant 2,3, puis va reprendre sa forme ou position initiale de manière à assurer le blocage en position de la traverse 4,5 par rapport au montant 2,3.

Pour faciliter l'insertion dans l'un des montants 2,3, chaque extrémité des traverses 4,5 est avantageusement au moins en partie biseautée.

Pour garantir le maintien en position d'une traverse 4,5 encliquetée dans un montant 2,3, l'ossature en kit 1 comporte un organe de blocage 23 apte à être inséré simultanément dans au moins l'une des première et deuxième ouvertures 18,19 de ladite traverse 4,5 et dans la fente 17 du raidisseur 16 de cette dernière pour interdire, une fois l'encliquetage de ladite traverse 4,5, tout rapprochement des parties de l'enveloppe 17 de cette dernière situées de part et d'autre des fentes 17 et des première et deuxième ouvertures 18,19. Cet organe de blocage 23 est avantageusement un coussinet cylindrique apte à recevoir un axe 24 de pivotement solidaire d'un support 25 agencé pour être fixé sur un poteau ou mur non représenté, pour permettre si besoin le pivotement du vantail formé par l'ossature en kit 1 selon l'invention (Cf. figures 7 et 8). Ledit support 9 est avantageusement protégé par un capuchon 26 amovible. Pour maintenir en place l'organe de blocage 23, au moins l'une des première et deuxième ouvertures 18,19 de ladite traverse 4,5 et la fente 17 du raidisseur 16 de cette dernière comportent une découpe 27 dont la forme correspond à la section transversale dudit organe de blocage 23.

Les lames de remplissage 6 sont insérées dans la rainure 12 des montants 2,3 et/ou la rainure 21 des traverses 4,5 de l'ossature en kit 1 selon l'invention. Dans le cas de lames de remplissage 6 non jointives, des éléments entretoises, non représentés, sont insérés dans la rainure 12 des montants 2,3 ou la rainure 21 des traverses 4,5, dans les espaces libres entre les lames de remplissage 6.

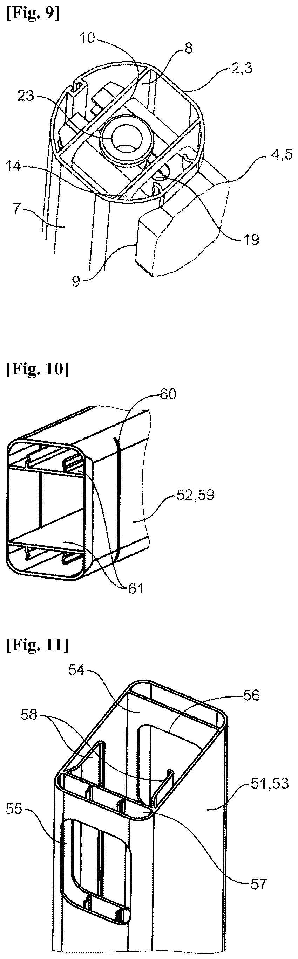

Selon un autre mode de réalisation représenté aux figures 10 à 12, l'ossature en kit 50 est semblable à l'ossature en kit 1conforme à l'invention décrite précédemment, et comporte au moins deux montants 51 sensiblement verticaux et deux traverses 52, ces dernières étant de préférence horizontales et reliant les deux montants 51 respectivement au voisinage de leurs extrémités inférieures et supérieures.

Ainsi, les deux montants 51 sont des tubes creux munis chacun d'au moins :
- une enveloppe 53 externe,
- un premier raidisseur 54 plan s'étendant longitudinalement à l'intérieur de ladite enveloppe 53, et
- une première ouverture 55 (Cf. figure 11) aménagée à chacune des extrémités longitudinales de l'enveloppe 53, traversant au moins l'épaisseur de cette dernière et étant conformée pour permettre l'insertion, dans l'enveloppe 53, de l'une des extrémités de l'une des traverses 52 de l'ossature en kit 50 de sorte que l'axe longitudinal de ladite traverse 52 soit sécant, avantageusement perpendiculaire, au premier raidisseur 54.

Pour cela, la première ouverture 55 de l'enveloppe 53 a une forme correspondant à la section transversale de la traverse 52 associée, mais de dimensions très légèrement supérieures pour permettre l'insertion de façon ajustée de cette dernière.

Les montants 51 comprennent en outre au moins deux deuxièmes ouvertures 56 aménagées dans le premier raidisseur 54 et disposées chacune dans le prolongement de l'une des premières ouvertures 55 pour permettre l'insertion, dans l'enveloppe 53 puis dans le premier raidisseur 54, d'une extrémité de l'une des traverse 52 de l'ossature en kit 50. Pour ce faire, la forme des deuxième ouvertures 56 est semblable à celle des premières ouvertures 55.

Par ailleurs, de manière avantageuse, les montants 51 comportent également respectivement un deuxième raidisseur 57 plan s'étendant longitudinalement à l'intérieur de ladite enveloppe 53 entre la première ouverture 55 et le premier raidisseur 54 et parallèlement à ce dernier. Dans cette configuration, la première ouverture 55 aménagée à chacune des extrémités longitudinales de l'enveloppe 53 traverse non seulement l'épaisseur de cette dernière, mais également l'épaisseur dudit deuxième raidisseur 57.

En outre, les montants 51 diffèrent des montants 2,3 de l'ossature en kit 1 décrite précédemment en ce qu'ils comportent au moins à chacune de leurs extrémités longitudinales au moins une languette 58 interne élastiquement déformable s'étendant longitudinalement à l'intérieur desdits montants 51 et étant solidaire de l'enveloppe 53. De manière avantageuse, les montants 51 comportent deux languettes 58 internes disposées transversalement en vis-à-vis entre les premier et deuxième raidisseurs 54,57.

Les traverses 52 sont des tubes creux munis chacune d'au moins :
- une enveloppe 59 externe, et
- une entaille 60 (Cf. figure 10) aménagée transversalement à chacune des extrémités longitudinales de l'enveloppe 59 apte à coopérer avec l'extrémité libre de la languette 58 interne d'un des montants 51 lorsque les extrémités des traverses 52 sont insérées dans la première ouverture 55 dudit montant 51.

Selon un mode de réalisation avantageux, les traverses 52 comprennent deux entailles 60 aménagées transversalement en vis-à-vis.

Par ailleurs, les traverses 52 comprennent au moins un et avantageusement deux raidisseurs 61 plans parallèles entre eux et s'étendant longitudinalement à l'intérieur de ladite enveloppe 59.

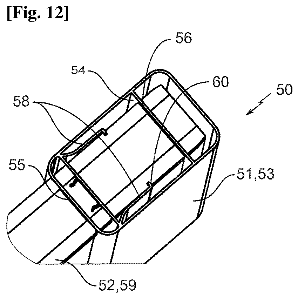

On comprend bien que chaque languette 58 interne est telle que l'élasticité permet à son extrémité libre de se rapprocher vers l'enveloppe 53 du montant 51 associé, puis de reprendre sa place initiale. Ainsi, avec cette configuration, chaque extrémité de l'une des traverses 52 est insérée dans la première ouverture 55 de l'enveloppe 53 d'un des montants 51, puis encliquetée par rapport à chaque languette 58 interne de ce dernier. Pour l'encliquetage, l'extrémité libre de chaque languette 58 interne va se rapprocher vers l'enveloppe 53 du montant 51, jusqu'à ce que ladite extrémité libre de chaque languette 58 interne vienne s'engager dans l'entaille 61 associée de l'enveloppe 59 de la traverse 52, chaque languette 58 interne reprenant alors sa position initiale (Cf. figure 12).

Pour faciliter l'insertion dans l'un des montants 51, chaque extrémité des traverses 52 est avantageusement au moins en partie biseautée.

Les montant 51 et traverses 52 de l'ossature en kit 50 pourront également comporter de rainures, non représentées sur les figures, pour recevoir au moins une partie des lames de remplissage.

L'ossature en kit 1 conforme à invention, qui est définie par les revendications annexées, trouve une application particulière dans la réalisation d'un vantail de portail pivotant ou coulissant formé de deux montants et d'au moins deux traverses, les premières et deuxièmes ouvertures n'étant alors pas aménagées qu'aux extrémités longitudinales des montants. Toutefois, cette ossature en kit 1 pourra également être utilisée pour réaliser des éléments de barrière à fixer sur le sol ou le dessus d'un muret par exemple, ne comportant qu'un seul montant et qu'une seule traverse. Dans cette dernière hypothèse, seule une des extrémités longitudinales de la traverse est encliquetée dans le montant les premières et deuxièmes ouvertures n'étant alors pas nécessairement aménagées à l'une des extrémités longitudinales du montant.

Enfin, il va de soi que les exemples d'ossatures en kit 1,50 conformes à l'invention qui viennent d'être décrits ne sont que des illustrations particulières, en aucun cas limitatives de l'invention.

## Revendications

1. Ossature en kit (1) destinée notamment à réaliser un vantail fixe ou pivotant ou coulissant pour un portail ou analogue, ladite ossature en kit (1) comprenant au moins un montant (2,3) et une traverse (4,5) reliés entre eux, chaque montant (2,3) étant un tube creux muni d'au moins :
- une enveloppe (7) externe,
- un premier raidisseur (8) plan s'étendant longitudinalement à l'intérieur de ladite enveloppe (7),
- une première ouverture (9) aménagée sur l'enveloppe (7) et traversant au moins l'épaisseur de cette dernière, et
- une deuxième ouverture (10) aménagée dans le premier raidisseur (8) et disposée dans le prolongement de la première ouverture (9) et ayant une forme semblable à celle de ladite première ouverture (9), chaque traverse (4,5) comportant au moins une extrémité longitudinale conformée pour être insérée de façon ajustée dans les première et deuxième ouvertures (9,10) associées et encliquetée par rapport audit montant (2,3) ladite ossature en kit (1) étant **caractérisée en ce que** ladite extrémité de chaque traverse (4,5) est élastiquement déformable pour être encliquetée par rapport audit premier raidisseur (8) des montants (2,3), et **en ce que** chaque traverse (4,5) est un tube creux muni d'au moins :
- une enveloppe (15) externe, et
- une entaille (20) aménagée transversalement sur l'enveloppe (15) apte à coopérer avec le premier raidisseur (8) des montants (2,3), lorsque l'extrémité de la traverse (4,5) est insérée dans les première et deuxième ouvertures (9,10) dudit montant (2,3).

2. Ossature en kit (50) destinée notamment à réaliser un vantail fixe ou pivotant ou coulissant pour un portail ou analogue, ladite ossature en kit (50) comprenant au moins un montant (51) et une traverse (52) reliés entre eux, chaque montant (51) étant un tube creux muni d'au moins :
- une enveloppe (53) externe,
- un premier raidisseur (54) plan s'étendant longitudinalement à l'intérieur de ladite enveloppe (53),
- une première ouverture (55) aménagée sur l'enveloppe (53) et traversant au moins l'épaisseur de cette dernière, et
- une deuxième ouverture (57) aménagée dans le premier raidisseur (54) et disposée dans le prolongement de la première ouverture (55) et ayant une forme semblable à celle de ladite première ouverture (55), chaque traverse (52) comportant au moins une extrémité longitudinale conformée pour être insérée de façon ajustée dans les première et deuxième ouvertures (55,57) associées et encliquetée par rapport audit montant (51) ladite ossature en kit (50) étant **caractérisée en ce que** chaque montant (51) comporte au moins une languette (58) interne élastiquement déformable s'étendant longitudinalement à l'intérieur desdits montants (51) et étant solidaire de l'enveloppe (53), et **en ce que** chaque traverse (52) est un tube creux muni d'au moins :
- une enveloppe (59) externe, et
- une entaille (60) aménagée transversalement sur l'enveloppe (59) apte à coopérer avec l'extrémité libre de la languette (58) interne, lorsque l'extrémité de la traverse (52) est insérée dans les première et deuxième ouvertures (55,57) dudit montant (51), ladite extrémité de chaque traverse (52) étant encliquetée par rapport à l'extrémité libre de ladite languette (58) interne.

3. Ossature en kit (1) selon la revendication 1 **caractérisée en ce que** l'extrémité longitudinale de chaque traverse (4,5) comporte une première ouverture (18) et une deuxième ouverture (19) aménagées longitudinalement en vis-à-vis depuis chacune des extrémités longitudinales de l'enveloppe (15) et traversant au moins l'épaisseur de cette dernière.

4. Ossature en kit (1) selon l'une quelconque des revendications 1 ou 3 **caractérisée en ce que** le premier raidisseur (8) comprend au moins un rebord (11) s'étendant vers l'intérieur de chacune des deuxième ouvertures (10) et étant apte à coopérer avec l'entaille (20) de la traverse (4,5).

5. Ossature en kit (1) selon l'une quelconque des revendications 1, 3 et 4 **caractérisée en ce qu'**elle comporte un organe de blocage (23) pour garantir le maintien en position d'une traverse (4,5) encliquetée dans un montant (2,3).

6. Ossature en kit (1) selon la revendication 5 **caractérisée en ce que** l'organe de blocage (23) est apte à être inséré simultanément dans au moins l'une des première et deuxième ouvertures (18,19) de ladite traverse (4,5) pour interdire, une fois l'encliquetage de ladite traverse (4,5), tout rapprochement des parties de l'enveloppe (15) de cette dernière situées de part et d'autre des première et deuxième ouvertures (18,19).

7. Ossature en kit (1) selon la revendication 6 **caractérisée en ce que** l'organe de blocage (23) est un coussinet cylindrique apte à recevoir un axe (24) de pivotement solidaire d'un support (25) agencé pour être fixé sur un poteau ou mur.

## Patentansprüche

1. Bausatzrahmen (1), der insbesondere dazu bestimmt ist, einen festen oder schwenkbaren oder verschiebbaren Flügel für ein Tor oder Ähnliches herzustellen, wobei der Bausatzrahmen (1) mindestens einen Pfosten (2, 3) und einen Querträger (4, 5) umfasst, die miteinander verbunden sind, wobei jeder Pfosten (2, 3) ein Hohlrohr ist, das mit mindestens Folgendem versehen ist:
- einer äußeren Hülle (7),
- einer ersten planaren Versteifung (8), die sich längs innerhalb der Hülle (7) erstreckt,
- einer ersten Öffnung (9), die in der Hülle (7) ausgebildet ist und mindestens die Dicke der letzteren durchdringt, und
- einer zweiten Öffnung (10), die in der ersten Versteifung (8) ausgebildet und in der Verlängerung der ersten Öffnung (9) angeordnet ist und eine ähnliche Form wie die erste Öffnung (9) hat, wobei jeder Querträger (4, 5) mindestens ein Längsende umfasst, das so geformt ist, dass es passgenau in die zugehörigen ersten und zweiten Öffnungen (9, 10) eingeführt und im Verhältnis zu dem Pfosten (2, 3) eingerastet werden kann, wobei der Bausatzrahmen (1) **dadurch gekennzeichnet ist, dass** das Ende jedes Querträgers (4, 5) elastisch verformbar ist, um im Verhältnis zu der ersten Versteifung (8) der Pfosten (2, 3) eingerastet werden zu können, und **dadurch,** dass jeder Querträger (4, 5) ein Hohlrohr ist, das mit mindestens Folgendem versehen ist:
- einer äußeren Hülle (15), und
- einer quer über die Hülle (15) ausgebildeten Kerbe (20), die mit der ersten Versteifung (8) der Pfosten (2, 3) zusammenwirken kann, wenn das Ende des Querträgers (4, 5) in die erste und zweite Öffnung (9, 10) des Pfosten (2, 3) eingeführt ist.

2. Bausatzrahmen (50), der insbesondere dazu bestimmt ist, einen festen oder schwenkbaren oder verschiebbaren Flügel für ein Tor oder Ähnliches herzustellen, wobei der Bausatzrahmen (50) mindestens einen Pfosten (51) und einen Querträger (52) umfasst, die miteinander verbunden sind, wobei jeder Pfosten (51) ein Hohlrohr ist, das mit mindestens Folgendem versehen ist:
- einer äußeren Hülle (53),
- einer ersten planaren Versteifung (54), die sich längs innerhalb der Hülle (53) erstreckt,
- einer ersten Öffnung (55), die in der Hülle (53) ausgebildet ist und mindestens die Dicke der letzteren durchdringt, und
- einer zweiten Öffnung (57), die in der ersten Versteifung (54) ausgebildet und in der Verlängerung der ersten Öffnung (55) angeordnet ist und eine ähnliche Form wie die erste Öffnung (55) hat, wobei jeder Querträger (52) mindestens ein Längsende umfasst, das so geformt ist, dass es passgenau in die zugehörigen ersten und zweiten Öffnungen (55, 57) eingeführt und im Verhältnis zu dem Pfosten (51) eingerastet werden kann, wobei der Bausatzrahmen (50) **dadurch gekennzeichnet ist, dass** jeder Pfosten (51) mindestens eine innere, elastisch verformbare Lasche (58) umfasst, die sich längs innerhalb der Pfosten (51) erstreckt und fest mit der Hülle (53) verbunden ist, und **dadurch,** dass jeder Querträger (52) ein Hohlrohr ist, das mit mindestens Folgendem versehen ist:
- einer äußeren Hülle (59), und
- einer quer über die Hülle (59) ausgebildeten Kerbe (60), die mit dem freien Ende der inneren Lasche (58) zusammenwirken kann, wenn das Ende des Querträgers (52) in die erste und zweite Öffnung (55, 57) des Pfostens (51) eingeführt ist, wobei das Ende jedes Querträgers (52) im Verhältnis zu dem freien Ende der inneren Lasche (58) eingerastet ist.

3. Bausatzrahmen (1) nach Anspruch 1, **dadurch gekennzeichnet, dass** das Längsende jedes Querträgers (4, 5) eine erste Öffnung (18) und eine zweite Öffnung (19) umfasst, die längs gegenüberliegend von jeweils den Längsenden der Hülle (15) angeordnet sind und mindestens die Dicke der letzteren durchdringen.

4. Bausatzrahmen (l) nach einem der Ansprüche 1 oder 3, **dadurch gekennzeichnet, dass** die erste Versteifung (8) mindestens eine Kante (11) umfasst, die sich in jede der zweiten Öffnungen (10) nach innen erstreckt und mit der Kerbe (20) des Querträgers (4, 5) zusammenwirken kann.

5. Bausatzrahmen (l) nach einem der Ansprüche 1, 3 und 4, **dadurch gekennzeichnet, dass** er ein Blockierungselement (23) umfasst, um zu gewährleisten, dass die Position eines in einen Pfosten (2, 3) eingerasteten Querträgers (4, 5) aufrechterhalten wird.

6. Bausatzrahmen (1) nach dem Anspruch 5, **dadurch gekennzeichnet, dass** das Blockierungselement (23) gleichzeitig in mindestens eine der ersten und zweiten Öffnungen (18, 19) des Querträgers (4,5) eingeführt werden kann, um nach dem Einrasten des Querträgers (4, 5) jede Annäherung der Teile der Hülle (15) des letzteren, die sich auf beiden Seiten der ersten und zweiten Öffnungen (18, 19) befinden, zu verhindern.

7. Bausatzrahmen (1) nach Anspruch 6, **dadurch gekennzeichnet, dass** das Blockierungselement (23) ein zylindrisches Lager ist, das eine Schwenkachse (24) aufnehmen kann, die fest mit einem Träger (25) verbunden ist, der zum Befestigen an einem Pfeiler oder einer Wand vorgesehen ist.

## Claims

1. Frame kit (1) intended in particular to produce a fixed or pivoting or sliding door for a gate or similar, said frame kit (1) comprising at least a stile (2, 3) and a cross-member (4, 5) connected to each other, each stile (2, 3) being a hollow tube provided with at least:
- an outer envelope (7),
- a first flat stiffener (8) extending longitudinally inside said envelope (7),
- a first opening (9) arranged on the envelope (7) and passing through at least the thickness of the latter, and
- a second opening (10) arranged in the first stiffener (8) and disposed as an extension of the first opening (9) and having a shape similar to that of said first opening (9), each cross-member (4, 5) including at least one longitudinal end shaped to be inserted in a fitted manner into the associated first and second openings (9, 10) and snapped in with respect to said stile (2, 3), said frame kit (1) being **characterised in that** said end of each cross-member (4, 5) is elastically deformable to be snapped in with respect to said first stiffener (8) of the stiles (2, 3), and **in that** each cross-member (4, 5) is a hollow tube provided with at least:
- an outer envelope (15), and
- a notch (20) arranged transversely on the envelope (15) capable of cooperating with said first stiffener (8) of the stiles (2, 3), when the end of the cross-member (4, 5) is inserted into the first and second openings (9, 10) of said stile (2, 3).

2. Frame kit (50) intended in particular to produce a fixed or pivoting or sliding door for a gate or similar, said frame kit (50) comprising at least one stile (51) and a cross-member (52) connected to each other, each stile (51) being a hollow tube provided with at least:
- an outer envelope (53),
- a first flat stiffener (54) extending longitudinally inside said envelope (53),
- a first opening (55) arranged on the envelope (53) and passing through at least the thickness of the latter, and
- a second opening (57) arranged in the first stiffener (54) and disposed as an extension of the first opening (55) and having a shape similar to that of said first opening (55), each cross-member (52) including at least one longitudinal end shaped to be inserted in a fitted manner into the associated first and second openings (55, 57) and snapped in with respect to said stile (51), said frame kit (50) being **characterised in that** each stile (51) includes at least one elastically deformable inner tab (58) extending longitudinally inside said stiles (51) and being rigidly connected to the envelope (53), and **in that** each cross-member (52) is a hollow tube provided with at least:
- an outer envelope (59), and
- a notch (60) arranged transversely on the envelope (59) capable of cooperating with the free end of the inner tab (58), when the end of the cross-member (52) is inserted into the first and second openings (55, 57) of said stile (51), said end of each cross-member (52) being snapped in with respect to the free end of said inner tab (58).

3. Frame kit (1) according to claim 1, **characterised in that** the longitudinal end of each cross-member (4, 5) includes a first opening (18) and a second opening (19) arranged longitudinally facing each other from each of the longitudinal ends of the envelope (15) and passing through at least the thickness of the latter.

4. Frame kit(l) according to any one of claims 1 or 3, **characterised in that** the first stiffener (8) comprises at least one flange (11) extending towards the inside of each of the second openings (10) and being capable of cooperating with the notch (20) of the cross-member (4, 5).

5. Frame kit(l) according to any one of claims 1, 3 and 4, **characterised in that** it includes a blocking member (23) to guarantee the retention in position of a cross-member (4, 5) snapped into a stile (2, 3).

6. Frame kit (1) according to claim 5, **characterised in that** the blocking member (23) is capable of being inserted simultaneously into at least one of the first and second openings (18, 19) of said cross-member (4, 5) to prevent, once said cross-member (4, 5) has been snapped in, any movement closer together of the parts of the envelope (15) of the latter located on either side of the first and second openings (18, 19).

7. Frame kit (1) according to claim 6, **characterised in that** the blocking member (23) is a cylindrical bushing capable of receiving a pivot axis (24) rigidly connected to a support (25) arranged to be fastened onto a pole or wall.
